# EUROPÄISCHE PATENTANMELDUNG

(11) **EP 1 033 224 A1**
(43) Veröffentlichungstag der Anmeldung: **06.09.2000**
(21) Anmeldenummer: 00103367.9
(22) Anmeldetag: 22.02.2000
(51) Int. Cl.: B29C 45/16, F02F 7/00, F01M 11/00, B29C 65/02

(54) **Verfahren zur Fertigung von Kunststofformteilen mit thermisch höher belasteten Segmenten**

(30) Priorität: 01.03.1999 DE 19908846
(71) Anmelder: BASF AKTIENGESELLSCHAFT, 67056 Ludwigshafen (DE)
(72) Erfinder: Eichenauer, Ulrich, Dr., 67459 Böhl-Iggelheim (DE); Endemann, Ulrich, Dr., 67278 Bockenheim/weinstr (DE); Wilhelm, Wolfgang, 67067 Ludwigshafen (DE); Homes, Angelika, 64319 Pfungstadt (DE); Bluhm, Rüdiger, Dr., 67117 Limburgerhof (DE)
(74) Vertreter: Isenbruck, Günter, Dr.

(57) **Zusammenfassung**

Die Erfindung bezieht sich auf ein Verfahren zur Fertigung von temperaturbeständigen Kunststoffbauteilen, nach einem Spritzgießverfahren, wobei einer Kavität (2) mindestens zwei Schmelzeströme zuführbar sind. Ein erster der Kavität (2) zuführbarer Schmelzestrom (28) enthält einen Werkstoff A, mindestens ein weiterer Schmelzestrom (29) enthält einen Werkstoff B mit einem Polymerblend aus temperaturbeständigen Materialien und Bestandteilen des Werkstoffes A.

## Beschreibung

Die vorliegende Erfindung bezieht sich auf ein Verfahren zur Fertigung von aus Kunststoff gefertigten Formteilen mit thermisch höher belasteten Segmenten, beispielsweise Motoranbauteilen wie Sauganlagen.

Kunststofformteile, die aus mehreren Komponenten bestehen, können im Spritzgießverfahren hergestellt werden, nachfolgend als Mehrkomponenten-Spritzgießverfahren bezeichnet. Werden die Komponenten nacheinander, eventuell mit einer Simultanphase, durch einen gemeinsamen Anspritzpunkt eingespritzt, entstehen Formteile, die eine Haut- und mindestens eine Kernschicht aufweisen. Dieses Verfahren wird als Sandwich-Spritzgießen oder auch als Coinjektions-Verfahren bezeichnet.

Wird jede Komponente durch mindestens einen eigenen Anspritzpunkt eingespritzt, positionieren sich die Komponenten partiell nebeneinander. Zu diesen Verfahren zählt das Biinjektions-Spritzgießen, bei welchem die eingespritzten Schmelzeströme direkt aufeinandertreffen. Sie können simultan oder auch zeitlich versetzt eingespritzt werden. Bei den unter anderem mit den Bezeichnungen 2-Komponenten-Spritzgießen, Overmoulding oder auch Verbund-Spritzgießen bekannten Verfahren erfolgt eine Trennung von Kavitätenteilen durch Kerne, Schieber oder Dreheinrichtungen. Der teilweise erkaltete Vorspritzling, bestehend aus der ersten Komponente, wird partiell mit einer oder mehreren Komponenten überspritzt.

Konventionelle Spritzgießmaschinen, welche nur für das Spritzgießen einer Komponente geeignet sind, kommen beim Einlegeverfahren zum Einsatz. Hier wird ein Vorspritzling mit der ersten Komponente in einem Werkzeug gefertigt. Dieser wird anschließend in ein weiteres Werkzeug eingelegt und mit einer weiteren Komponente überspritzt.

Vorteilhaft beim Biinjektions-Verfahren sind die thermischen Verhältnisse beim Aufeinandertreffen der Schmelzen, wodurch für eine sehr große Anzahl von Materialien eine Verbindung realisiert werden kann. Sehr vorteilhaft und von großem wirtschaftlichen Interesse sind ferner die wesentlich niedrigeren Werkzeugkosten, da aufwendige und kostenintensive Kerne und Drehfunktionen entfallen können. Die Zykluszeit ist weiterhin meist erheblich kürzer als bei vergleichbaren Teilen mit aufeinanderfolgenden Einspritzphasen.

DE 42 24 171 A1 offenbart ein Spritzgußteil sowie ein Verfahren und ein Spritzgießwerkzeug zur Herstellung von Spritzgußteilen. Die Teile weisen mindestens zwei Farben und/oder mindestens zwei unterschiedliche Kunststoffe auf und werden in wenigstens zwei aufeinanderfolgenden Prozeßschritten, in denen die Kunststoffe nacheinander in ein Spritzgießwerkzeug eingespritzt werden, hergestellt. Gemäß DE 42 24 171 A1 verbleibt nach dem Prozeßschritt des Einspritzens des ersten Kunststoffes das entstandene Spritzgußteil im geschlossenen Werkzeug; dann wird ein an das Spritzgußteil angrenzender Hohlraum erzeugt oder freigegeben und in diesen der zweite Kunststoff eingespritzt. Zu diesem Zweck weist das Spritzgießwerkzeug mindestens einen Schieber auf, der den für das Spritzgußteil vorgesehenen Hohlraum im Werkzeug verändert.

Dadurch kann erreicht werden, daß das Spritzwerkzeug zwischen den beiden Spritzgießvorgängen geschlossen bleiben kann und ein Kontakt der Oberfläche des vorgespritzten Teils mit der Umgebungsluft vermieden werden kann. Nachteilig bei der Vorgehensweise gemäß DE 42 24 171 A1 ist der Umstand, daß die Zykluszeit erheblich länger ist.

DE-U- 93 19 190.1 bezieht sich auf ein Formteil mit resistenter Oberfläche. Das Formteil besteht aus einem tragenden Unterteil aus einem ersten thermoplastischen Polymer und eine diese umgebende Schutzschicht aus einem zweiten thermoplastischen Polymer auf Basis von Polyamid 11 oder Polyamid 12, wobei die Schutzschicht form- und verfahrensbedingt eine Dicke zwischen 0,2 und 5 mm und gezielte funktionelle Durchbrüche aufweisen kann. Das erste Polymer kann aus der Gruppe Polyamid, Polyester, Polyolefin, Polyacetal, Polycarbonat, Polyphthalamid und deren Blends ausgebildet sein, wobei das zweite Polymer aus der Gruppe der Homo- oder Copolymer des Polyamid 11, Polyamid 12, ihrer Blends untereinander oder ihrer Blends mit dem semikristallinen oder amorphen Homo- oder Copolyamiden ausgebildet sein kann.

Das Formteil, gefertigt nach den Coinjektions-Verfahren, hat eine widerstandsfähigere Oberfläche verglichen mit dem Kernmaterial, wobei die Materialeigenschaft der hohen Härte nur an der Randzone des Bauteils vorgesehen ist.

Durch die Entwicklung der Abgasrückführung bei Kfz-Verbrennungsmotoren steigt die Temperaturbeanspruchung von Bauteilen am Motor erheblich. Durch die Anhebung des Temperaturniveaus gelangen Anbauteile, wie beispielsweise die Sauganlage, die bisher häufig aus Polyamid gefertigt wird, an die Grenzen ihrer thermischen Belastbarkeit. Angesichts der hohen Kosten, die mit einer Fertigung der Sauganlage aus hochtemperaturbeständigen Thermoplasten verbunden wären, erscheint eine Fertigung der Sauganlage mit diesen Materialien nicht wirtschaftlich.

Angesichts des skizzierten Standes der Technik und der sich abzeichnenden Entwicklungstendenzen liegt der Erfindung die Aufgabe zugrunde, ein wirtschaftliches Fertigungsverfahren für thermisch belastete Kunststoffbauteile bereitzustellen, so daß sich Bauteile beanspruchungsgerecht herstellen lassen.

Erfindungsgemäß wird diese Aufgabe dadurch gelöst, daß einer Kavität mindestens zwei Werkstoffe zuführbar sind, die Werkstoffe A und mindestens ein weiterer von A verschiedener Werkstoff B, der eine Komponente 1 und eine von 1 verschiedene temperaturbeständige Komponente 2 enthält. Eine weitere erfindungsgemäße Lösung besteht darin, eine einen Werkstoff A enthaltende Bauteilkomponente und mindestens eine weitere Bauteilkomponente, die einen Werkstoff B mit einer Komponente 1 und einer temperaturbeständigen Komponente 2 enthält, miteinander zu verschweißen. Schließlich ist in einer weiteren vorteilhaften erfindungsgemäßen Lösung vorgesehen, nach einem Spritzgießverfahren bei dem mindestens zwei Werkstoffe verarbeitet werden, ein Bauteil aus einem Werkstoff A zu spritzen und mit mindestens einem weiteren Werkstoff B zu über-, um-, oder anzuspritzen, wobei der Werkstoff B eine temperaturbeständige Komponente 2 und eine Komponente 1 enthält. Eine abschließend genannte weitere erfindungsgemäße Lösung sieht vor, bei einem Spritzgießverfahren mit mindestens zwei Werkstoffen, ein Bauteil aus einem Werkstoff B zu spritzen, der eine temperaturbeständige Komponente 2 und eine Komponente 1 enthält und mit mindestens einem weiteren Werkstoff A über-, um-, oder anzuspritzen.

Die mit den erfindungsgemäßen Lösungen einhergehenden Vorteile sind vielfältiger Natur. Mittels der erfindungsgemäßen Verfahren lassen sich thermisch hoch beanspruchte Bauteilpartien gezielt aus Materialien herstellen, die höherwertig sind, wobei die geringer beanspruchten Teile aus preiswerteren Polymeren herstellbar sind. Durch die Beimischung beispielsweise der Komponente 1 zur Komponente 2 des Werkstoffes B wird dieser Werkstoff B dem Werkstoff A gewissermaßen ähnlicher gemacht. Es hat sich herausgestellt, daß die Verschmelzungsbereiche an den Bauteilen keine Schwachstellen darstellen und sowohl thermisch als auch mechanisch hoch beanspruchbar sind. Dadurch läßt sich eine beanspruchungsgerechte Konstruktion erzielen, bei der die höherwertigen Materialien in den thermisch belasteten Partien des Bauteils vorgesehen werden, während sich in den geringer beanspruchten Bauteilpartien das preiswertere Polymer befindet.

Der Werkstoff A sowie der Werkstoff B können Additive enthalten, die beispielsweise der Stabilisierung der beiden Werkstoffe dienen. Beide Werkstoffe A und B können bis zu 60% Glasfasern, Mineralien oder auch ein Glasfaser/Mineraliengemisch bis zu 60% enthalten. In weiteren Ausgestaltungen des erfindungsgemäßen Verfahrens enthält der Werkstoff A als Komponente 1 eines oder mehrerer Polyamide aus der Gruppe der Polyamide 6, 6.6., 4.6, 11 oder 12, PPA (Polyphthalamid) oder anderen Copolymeren auf Basis von Polyamid. Die Komponente 1 des Werkstoffes A kann auch ein Copolyamid mit aromatischen oder nicht aromatischen Monomerbausteinen enthalten. Der Werkstoff A kann neben der erwähnten Komponente 1 als weitere Komponente 2 einen Thermoplasten aus der Gruppe von Polyethersulfon (PES), Polysulfon (PSU), Polyetherimid (PEI), Polyphenylensulfid (PPS), Copolymeren auf Basis dieser Polymere oder einem Styrol enthaltenden Copolymeren enthalten.

Der Werkstoff B enthält neben den fakultativ anwesenden oben aufgeführten Füllstoffen einerseits als Komponente 1 bevorzugt Polyamid 6, Polyamid 6.6 oder das Polyamid 4.6 oder das Polyamid 11 oder das Polyamid 12 oder PPA oder andere Copolymere.

Andererseits enthält der Werkstoff B als Komponente 2 bevorzugt Thermoplaste aus der Gruppe von Polyethersulfon (PES), Polysulfon (PSU), Polyetherimid (PEI) oder Polyphenylensulfid (PPS) oder Copolymere auf Basis dieser Polymere oder einem Styrol enthaltendem Copolymeren.

Im Werkstoff A können die Anteile bezogen auf die thermoplastische Matrix für Komponente 1 zwischen 50% und 100% und für Komponente 2 zwischen 0% und 50% liegen. Im Falle des Mischungsverhältnisses von 100:0 handelt es sich bei der Matrix von Werkstoff A um ein reines Polymer. Im Falle des Werkstoffes B liegen die Anteile bezogen auf die thermoplastische Matrix für Komponente 2 bevorzugt zwischen 50% und 99% und für Komponente 1 zwischen 1% und 50%, d. h. der Werkstoff B muß neben der temperaturbeständigen Komponente 2 immer auch eine Komponente 1 enthalten.

Außer durch Spritzgießverfahren lassen sich temperaturbeständige Kunststoffbauteile auch durch Verschweißen miteinander verbinden. Eine der zu verschweißenden Bauteilkomponenten enthält den Werkstoff A, während die damit zu verbindende Bauteilkomponente eine Komponente B umfaßt, mit einer temperaturbeständigen Komponente 2 und gegebenenfalls Bestandteilen an Komponente 1.

Eine weitere Fertigungsmöglichkeit temperaturbeständiger Bauteile besteht durch den Einsatz des Eingangs beschriebenen Coinjektionsverfahrens, wobei der Werkstoff A die Hautschicht und der Werkstoff B die Kernsehicht bildet. Die Kernkomponente kann gezielt, beispielsweise am Fließwegende den Werkstoff A durchbrechen, so daß in thermisch höher belasteten Bereichen des Formteils kein Schichtaufbau, sondern nur der reine Kernwerkstoff B vorliegt. Denkbar ist auch die Herstellung der Bauteile mit einem Schichtaufbau, bei welchem der Werkstoff A im Kern und der Werkstoff B als Haut eingesetzt wird.

Bei der Herstellung der Formteile im Biinjektionsverfahren werden die Schmelzen so eingespritzt, daß die Werkstoffe im Bauteil partiell nebeneinander liegen. Der thermisch belastbare Werkstoff wird dabei im thermisch höher beanspruchten Bereich positioniert. Die Werkstoffe können dabei sowohl simultan als auch zeitlich nacheinander eingespritzt werden.

Die Bauteile können auch durch die Fertigung eines Vorspritzlings aus Werkstoff A oder B hergestellt werden, wenn dieser anschließend mit dem zweiten Werkstoff partiell über-, um- oder angespritzt wird. Diese Bauteile können mit einer Mehrkomponenten-Spritzgießmaschine, welche mit einem Mehrkomponenten-Spritzgießwerkzeug ausgerüstet ist, gefertigt werden. Auch mit Einkomponentenmaschinen und -werkzeugen können, wie beschrieben, derartige Formteile im Einlegeverfahren hergestellt werden.

Mittels der erfindungsgemäßen Verfahren lassen sich Bauteile mit thermisch höher beanspruchten Bauteilpartien wirtschaftlich herstellen, wobei die thermisch höher belasteten Bauteilpartien aus dem die temperaturbeständige Komponente 2 enthaltenden Werkstoff B bestehen und die geringer beanspruchten Bauteilkomponenten aus dem Werkstoff A bestehen können.

Als Bauteile, die gemäß der erfindungsgemäßen Verfahren gefertigt werden können, seien die Sauganlage, das Saugrohr, Zylinderkopfhaube, Wasserbehälter, Einspritzpumpe und die Wasserpumpe als Motoranbauteile von Verbrennungsmotoren genannt.

Anhand einer Zeichnung sei die Erfindung nachstehend näher erläutert.

Es zeigt:
- Figur 1: eine Spritzgießmaschine mit einem vertikalen Spritzaggregat für Werkstoff B und ein horizontales Spritzaggregat für Werkstoff A und
- Figur 2: ein gemäß der erfindungsgemäßen Verfahren gefertigtes Kunststoffbauteil mit thermisch höher belastbaren Bauteilpartien, den Werkstoff B mit temperaturbeständiger Komponente 2 und Partien mit geringer Beanspruchung, den Werkstoff A enthaltend.

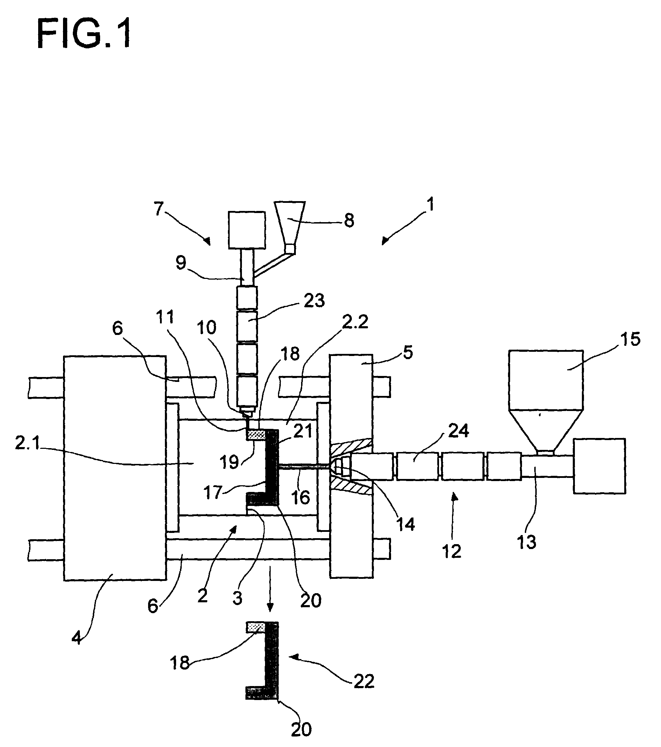

In der Darstellung gemäß Figur 1 ist schematisch eine Spritzgießmaschine 1 wiedergegeben, die ein vertikales Spritzaggregat 7 für Werkstoff B und ein horizontales Spritzaggregat 12 für Werkstoff A aufweist. Die Spritzgießmaschine 1 enthält ein Werkzeug 2 mit einer Kavität; das Werkzeug 2 ist in der Trennebene 3 in zwei Hälften 2.1 bzw. 2.2 geteilt. Die Werkzeughälfte 2.2 ist an einer festen Platte 5 aufgenommen, die Werkzeughälfte 2.1 sitzt an einer beweglichen Platte 4, die an Führungsholme 6 verfahrbar ist, um das Bauteil 17 zu entformen.

Das vertikale Spritzaggregat 7, über welches ein ein Blend aus Komponente 1 und Komponente 2 enthaltender Werkstoff B zugeführt wird, umfaßt einen Granulanrichter 8, einen Spritzgießzylinder 9, welcher von Heizbändern 23 umgeben ist und mündet mit einer Düse 10 in einem Angußkanal 11. Mittels des vertikalen Spritzaggregats 7 kann ein den Werkstoff B enthaltender Schmelzestrom in die Kavität 2 eingespritzt werden und bildet dort die thermisch höher beanspruchten Bauteilpartien 18 am Kunststoffbauteil 17 aus. Demgegenüber wird durch das horizontale Spritzaggregat 12 der Werkstoff A der Kavität 2 zugeführt, welcher über eine Düse 14 in den Angußkanal 16 gelangt und in der Kavität die geringer beanspruchten Bauteilpartien 20 am Kunststoffbauteil 17 ausbildet. Der Werkstoff A kann beispielsweise über einen Granulattrichter 15 am Spritzaggregat 12 zugeführt werden, dessen Zylinder 13 ebenfalls über Heizbänder 24 beheizt werden kann.

Dabei sind die Anspritzpunkte an der Kavität sowie die Spritzgießparameter und Schußvolumen so dosiert (positioniert), daß der thermisch höher beanspruchbare Werkstoff B auch in den Zonen am Bauteil 17 vorhanden ist, an dem die thermische Beanspruchung tatsächlich auftritt, während sich der preiswertere Werkstoff A überall dort im Bauteil 17 befindet, an der die thermische Beanspruchung desselben dies zuläßt.

Gemäß der erfindungsgemäßen Verfahren wird über das horizontale Spritzaggregat 12 der Werkstoff A zugeführt. Dieser Werkstoff A enthält beispielsweise als Komponente 1 ein Polyamid, so z.B. Polyamid 6, 6.6, 4.6, 11 oder 12 oder PPA. Neben den erwähnten Polyamiden kann auch ein Copolyamid mit aromatischen oder nicht aromatischen Monomerbausteinen als über das zweite Spritzaggregat zuführbare Komponente 1 im Werkstoff A dienen. Neben Polyamiden als Polymere ist auch ein Copolyamid einsetzbar, welches Bausteine umfaßt, die zur Herstellung der Polyamide 6, 6.6, 4.6, 11 oder 12 oder PPA dienen. Der Werkstoff A kann neben der Komponente 1 aus einem Polymer wie den beispielhaft angeführten Polyamiden als Komponente 2 auch Materialien wie PES, PSU, PEI, PPS, SAN oder ASA (d.h. in den beiden letzteren Fällen Styrol-Acrylnitril-Copolymere oder Acrylnitril-Styrol-Acrylester-Propfcopolymerisate) enthalten; ferner kann der Werkstoff A auch Additive zur Stabilisierung aufweisen. Als Füllstoffe für den Werkstoff A können bis zu einem Anteil von 60% Glasfasern oder Mineralien oder bis zum gleichen Anteil Glasfaser/Mineralgemische verwendet werden. Innerhalb der thermoplastischen Matrix des Werkstoffes A kann der Anteil der Komponente 1 zwischen 50% und 100% liegen, wobei die temperaturbeständige Komponente 2 einen Anteil zwischen 0% und 50% einnehmen kann. Ein Anteil von 100% bedeutet das Vorliegen eines reinen Polymers ohne Beimischungen, bezogen auf die thermoplastische Matrix.

Mittels des vertikalen Spritzaggregates 7 läßt sich der Werkstoff B, ein Blend aus den Komponenten 1 und der temperaturbeständigen Komponente 2 enthaltend, in die Kavität 2 des Werkzeuges einbringen. Dieser Werkstoff B kann von 0% bis 60% Glasfasern, Mineralien oder Gemische daraus als Füllstoff enthalten, während der verbleibende Anteil des Werkstoffes B aus einem Blend gebildet wird. Der Blend wird aus der Komponente 1 und der temperaturbeständigen Komponente 2 gebildet, wobei der Anteil der Komponente 1 bevorzugt zwischen 1% und 50% liegt und der Anteil der temperaturbeständigen Komponente 2 bezogen auf die thermoplastische Matrix zwischen 50% und 99%. Der Werkstoff B, welcher als der höherwertige Werkstoff anzusehen ist, kann beispielsweise als Komponente 2 Polyethersulfon, Polysulfon, Polyetherimid oder Polyphenylensulfid enthalten. Neben der temperaturbeständigen Komponente 2 befinden sich im Blend Anteile der Komponente 1, welche vorzugsweise aus den weiter oben aufgezählten Werkstoffen, insbesondere aus Polyamiden besteht. Der Werkstoff B kann analog zum Werkstoff A anstelle eines Glasfaser- oder Mineraliengehalts zwischen 0% und 60%, ein im gleichen Bereich liegenden Anteil eines Glasfaser/Mineralgemisches enthalten; die thermoplastische Matrix des Werkstoffes B wird durch den Blend aus temperaturbeständiger Komponente 2 wie PES, PSU, PEI oder PPS und der Komponente 1 gebildet.

Ausgehend von der in Figur 1 beispielhaft wiedergegebenen Spritzgießmaschine 1, wird der Werkstoff A über das horizontale Spritzaggregat 12 in die Kavität eingespritzt, der Werkstoff B über das vertikale Spritzaggregat 7. Die zu fertigenden Bauteile 17, die lokal höhere Temperaturen aushalten müssen, können auf herkömmliche Weise spritzgegossen werden, beispielsweise nach bekannten Mehrkomponenten-Spritzgießverfahren wie dem Verbund-Spritzgießen, Sandwich-Spritzgießen mit oder ohne gezieltem Durchbruch der Kernkomponente oder nach dem Einlegeverfahren.

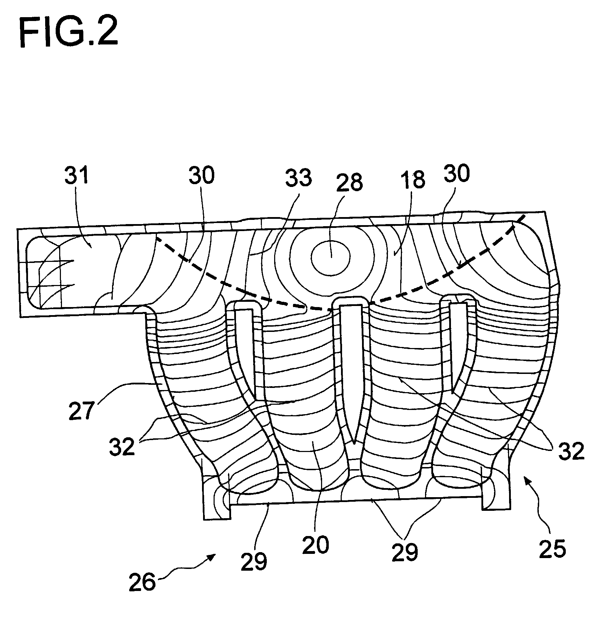

In Figur 2 ist ein gemäß des erfindungsgemäßen Verfahrens gefertigtes Bauteil mit thermisch höher belastbaren Bauteilpartien und mit Zonen geringerer Beanspruchung gezeigt.

In Figur 2 ist die Seitenansicht eines Saugrohres 25 dargestellt, wobei mit 26 der motorseitige Flansch des Saugrohres 25 bezeichnet ist. In der Darstellung gemäß Figur 2 erstrecken sich mehrere Einzelsaugrohre 27 zwischen dem motorseitigen Flansch 26 und einem Sammler 31 des Kunststoffbauteiles 25, im vorliegenden Falle ein Saugrohr. Ausgehend von drei im Bereich des Flansches 26 vorgesehenen Anspritzpunkten, werden Schmelzeströme des geringer beanspruchbaren Werkstoffes A in die Kavität eingespritzt und breiten sich durch diese, wie die zu unterschiedlichen Zeiten t aufgenommenen Fließfronten 32 zeigen, nach oben aus. Im Zentrum des Sammlers 31 liegt der Anspritzpunkt für den Werkstoff B, den Schmelzestrom für die thermisch höher beanspruchbare Komponente 28. Dort tritt der Schmelzestrom der thermisch höher beanspruchbaren Komponente 28 in die Kavität ein und breitet sich in dieser entsprechend der in Figur 2 wiedergegebenen Fließfronten 33 aus.

Beide sich aufeinander zu bewegenden Schmelzeströme bilden entlang der gestrichelten Linie einen Übergangsbereich 30, in welchem sich die Fließfronten 32, 33 zu einem festen Verbund vereinigen. Es hat sich herausgestellt, daß der Übergangsbereich zwischen den Werkstoffen A und B bei Verwendung von Polyamid und Polyamid/PES keine Schwachstellen am Bauteil 17 erzeugt. Dies bedeutet, daß durch die Einspritzung der den Blend enthaltenden Werkstoff B in die Kavität eine homogene Verbindung mit dem Werkstoff A, dem preiswerten Polyamid, erzeugt werden kann, was eine wirtschaftliche Herstellung eines Saugrohrs 25 ermöglicht.

Neben dem hier ausgewählten Beispiel Saugrohr ist mit dem erfindungsgemäßen Verfahren auch die wirtschaftliche Herstellung anderer lokal thermisch hoch beanspruchter Motoranbauteile möglich, wobei insbesondere Zylinderkopfhauben, Getriebegehäuse, Wasserkästen, Einspritz- und Wasserpumpen zu nennen wären.

### Bezugszeichenliste

- 1: Spritzgießmaschine
- 2: Werkzeug
- 2.1: erste Werkzeughälfte
- 2.2: zweite Werkzeughälfte
- 3: Trennebene
- 4: bewegliche Platte
- 5: feste Platte
- 6: Führungsholme
- 7: vertikales Spritzaggregat
- 8: Granulattrichter
- 9: Spritzgießzylinder
- 10: Düse
- 11: Angußkanal
- 12: horizontales Spritzaggregat
- 13: Zylinder
- 14: Düse
- 15: Granulattrichter
- 16: Angußkanal
- 17: Kunststoffbauteil
- 18: thermisch beanspruchte Bauteilpartie
- 19: Werkstoff B
- 20: thermisch geringer beanspruchte Bauteilpartie
- 21: Werkstoff A
- 22: entformtes Bauteil
- 23: Heizbänder
- 24: Heizbänder
- 25: Saugrohr
- 26: Flansch
- 27: Einzelsaugrohr
- 28: Einspritzpunkte des thermisch höher beanspruchbaren Werkstoffes B
- 29: Einspritzpunkte des geringer beanspruchbaren Werkstoffes A
- 30: Übergangsbereich
- 31: Sammler
- 32: Fließfront Werkstoff A (zu verschiedenen Zeitpunkten)
- 33: Fließfront Werkstoff B (zu verschiedenen Zeitpunkten)

## Patentansprüche

1. Verfahren zur Fertigung von temperaturbeständigen Kunststoffbauteilen, nach einem Spritzgießverfahren, wobei einer Kavität (2) mindestens zwei Werkstoffe zuführbar sind, dadurch gekennzeichnet, daß der Kavität (2) ein Werkstoff A und mindestens ein weiterer von A verschiedener Werkstoff B zugeführt werden, wobei der Werkstoff B eine Komponente 1 und eine von 1 verschiedene temperaturbeständige Komponente 2 enthält.

2. Verfahren gemäß Anspruch 1, dadurch gekennzeichnet, daß die Werkstoffe A und/oder B Additive zum Stabilisieren enthalten.

3. Verfahren gemäß Anspruch 1, dadurch gekennzeichnet, daß die Werkstoffe A und/oder B bis zu 60% Glasfasern enthalten.

4. Verfahren gemäß Anspruch 1, dadurch gekennzeichnet, daß die Werkstoffe A und/oder B bis zu 60% Mineralien enthalten.

5. Verfahren gemäß Anspruch 1, dadurch gekennzeichnet, daß die Werkstoffe A und/oder B bis zu 60% eines Glasfaser/Mineralgemisches enthalten.

6. Verfahren gemäß Anspruch 1, dadurch gekennzeichnet, daß der Werkstoff A eines oder mehrere Polyamide aus der Gruppe von Polyamid 6, Polyamid 6.6, Polyamid 4.6, Polyamid 11, Polyamid 12, Polyphthalamid oder anderen Copolymeren auf Basis von Polyamid als Komponente 1 enthält.

7. Verfahren gemäß Anspruch 6, dadurch gekennzeichnet, daß der Werkstoff A ein Copolyamid mit aromatischen oder nicht aromatischen Monomerbausteinen als Komponente 1 enthält.

8. Verfahren gemäß Anspruch 1, dadurch gekennzeichnet, daß der Werkstoff A einen zusätzlichen Thermoplast aus der Gruppe Polyethersulfon, Polysulfon, Polyetherimid, Polyphenylensulfid, Copolymere auf Basis dieser Polymere oder ein Styrol enthaltendes Copolymer als temperaturbeständige Komponente 2 enthält.

9. Verfahren gemäß Anspruch 1, dadurch gekennzeichnet, daß der Werkstoff B eines oder mehrere Polyamide aus der Gruppe Polyamid 6, Polyamid 6.6, Polyamid 4.6, Polyamid 11, Polyamid 12 oder Copolymere als Komponente 1 einerseits und ein Thermoplast aus der Gruppe Polyethersulfon, Polysulfon, Polyetherimid, Polyphenylensulfid oder deren Copolymere als temperaturbeständige Komponente 2 andererseits enthält.

10. Verfahren gemäß einem oder mehrerer der vorhergehenden Ansprüche, dadurch gekennzeichnet, daß im Werkstoff A die Anteile der Komponenten 1 und 2 bezogen auf die thermoplastische Matrix für Komponente 1 zwischen 50% und 100% und für Komponente 2 zwischen 0% und 50% liegen.

11. Verfahren gemäß einem oder mehrerer der vorhergehenden Ansprüche, dadurch gekennzeichnet, daß im Werkstoff B die Anteile der Komponenten 1 und 2 bezogen auf die thermoplastische Matrix für Komponente 2 zwischen 50% und 99% und für Komponente 1 zwischen 1% und 50% liegen.

12. Verfahren zur Fertigung von temperaturbeständigen Kunststoffbauteilen, wobei eine Bauteilkomponente einen Werkstoff A enthält und mindestens eine weitere Bauteilkomponente einen Werkstoff B mit einer Komponente 1 und einer temperaturbeständigen Komponente 2 enthält und die Bauteilkomponenten miteinander verschweißt werden.

13. Verfahren zur Fertigung von temperaturbeständigen Kunststoffbauteilen nach einem Spritzgießverfahren, mit mindestens zwei Werkstoffen, dadurch gekennzeichnet, daß ein Bauteil aus einem Werkstoff A gespritzt und mit mindestens einem weiteren Werkstoff B über-, um- oder angespritzt wird, der eine temperaturbeständige Komponente 2 und eine Komponente 1 enthält.

14. Verfahren zur Fertigung von temperaturbeständigen Kunststoffbauteilen nach einem Spritzgießverfahren mit mindestens zwei Werkstoffen, dadurch gekennzeichnet, daß ein Bauteil aus einem einen Werkstoff B, der eine temperaturbeständige Komponente 2 und eine Komponente 1 enthält, gespritzt wird und mit mindestens einem weiteren Werkstoff A über-, um-oder angespritzt wird.

15. Verfahren gemäß des Anspruchs 13 oder 14, dadurch gekennzeichnet, daß die beiden Werkstoffe A und B entweder zeitlich nacheinander oder auch simultan eingespritzt werden.

16. Verfahren zur Fertigung von temperaturbeständigen Kunststoffbauteilen nach einem Spritzgießverfahren mit mindestens zwei Werkstoffen, dadurch gekennzeichnet, daß der Werkstoff A die Hautschicht und der Werkstoff B die Kernschicht bildet und umgekehrt, wobei der Kernwerkstoff lokal - je nach thermischer Beanspruchung des Bauteils - den Hautwerkstoff durchbricht.

17. Bauteile wie Ansauganlage, Saugrohr, Zylinderkopfhaube, Getriebegehäuse, Wasserbehälter, Einspritz- oder Wasserpumpe mit thermisch höher beanspruchten Zonen, gefertigt gemäß der Verfahren nach einem oder mehrerer der vorhergehenden Ansprüche, dadurch gekennzeichnet, daß die thermisch höher belasteten Bauteilpartien (18) aus einem Werkstoff B mit einer temperaturbeständigen Komponente 2 und einer Komponente 1 bestehen und die geringer beanspruchten Bauteilpartien (20) aus einem Werkstoff A bestehen.
